# DEMANDE DE BREVET EUROPEEN

(11) **EP 1 826 699 A1**
(43) Date de publication de la demande: **29.08.2007**
(21) Numéro de dépôt: 07101764.4
(22) Date de dépôt: 05.02.2007
(51) Int. Cl.: G06F 21/00

(54) **Unité de traitement numérique sécurisée et procédé de protection de programmes**

(30) Priorité: 06.02.2006 FR 0650409
(71) Demandeur: ST MICROELECTRONICS S.A., 92120 Montrouge (FR)
(72) Inventeur: Wuidart, Sylvie, 83910, POURRIERES (FR)
(74) Mandataire: de Beaumont, Michel

(57) **Abrégé**

L'invention concerne une unité (11) de traitement numérique d'exécution d'instructions de programmes stockés dans au moins deux mémoires (12, 13, 14) et comportant au moins un premier registre (112) de stockage temporaire de l'opérateur d'une instruction courante à exécuter et au moins un deuxième registre (111) de stockage temporaire d'au moins un argument ou opérande de l'instruction, et un circuit de protection (118) pour soumettre, en amont dudit registre, ledit opérateur à une fonction de déchiffrement (119) si cet opérateur provient d'une des mémoires ou d'une zone de ces mémoires, identifiée à partir de l'adresse fournie par un compteur programme. L'invention concerne également un procédé de protection d'un programme de mise à jour d'un circuit électronique et de contrôle de son exécution, comportant au moins une étape de chiffrement ou déchiffrement d'opérateurs d'instructions du programme.

## Description

### Domaine de l'invention

La présente invention concerne de façon générale les unités de traitement de données numériques et, plus particulièrement, les unités centrales de traitement (CPU) qui interprètent des instructions de programmes contenues dans une ou plusieurs mémoires externes à l'unité de traitement.

La présente invention s'applique plus particulièrement aux unités de traitement destinées à exécuter des programmes mis à jour par des instructions stockées (par exemple téléchargées) dans une mémoire différente de celle contenant les programmes originaux.

### Exposé de l'art antérieur

Dans une unité de traitement, le ou les programmes d'origine sont stockés dans une mémoire non volatile non réinscriptible (mémoire morte) lors de la fabrication du circuit contenant l'unité. Ces programmes sont susceptibles d'être corrigés ou complétés dans la vie du produit par des codes correctifs (patch) chargés en mémoire non volatile programmable ou en mémoire vive (pour des correctifs à usage unique). Ces programmes de mise à jour doivent pouvoir prendre le contrôle du circuit, en particulier s'il s'agit de correctifs du programme résidant en mémoire morte qui n'est pas reprogrammable.

Un inconvénient est alors qu'un code correctif malveillant est susceptible de prendre le contrôle du circuit, par exemple pour pirater des quantités secrètes ou pour désactiver les mécanismes de contrôle d'accès.

Pour protéger le circuit contre l'exécution de programmes non autorisés, on prévoit généralement des mécanismes vérifiant l'intégrité du code programme exécuté (par exemple par un calcul de signature) pour contrôler que les programmes en cours d'exécution correspondent bien à des programmes autorisés.

Toutefois, ces mécanismes sont difficilement efficaces pour des mises à jour dont la signature ne peut pas être connue à l'avance. Pour le programme d'origine, la signature a pu être calculée à la fabrication et stockée également dans la mémoire morte. Par contre, pour les mises à jour, la signature est également stockée dans une mémoire reprogrammable car elle ne peut être connue dès la fabrication. Un code correctif malveillant peut donc être stocké avec une signature considérée comme acceptable par le circuit.

Une autre technique décrite dans le document US-A-2003/0061499 consiste à chiffrer un programme après ou lors de son introduction dans le circuit en utilisant une clé connue du circuit et un algorithme symétrique. Les instructions chiffrées sont stockées dans des zones des mémoires dont l'appel active (d'après l'adresse) un déchiffrement à l'exécution. Toutefois, un pirate qui parviendrait à charger un programme dans le circuit contournerait cette protection dans la mesure où le chiffrement est effectué par le circuit lui-même.

### Résumé de l'invention

La présente invention vise à pallier tout ou partie des inconvénients des unités de traitement exécutant des programmes susceptibles d'être mis à jour après fabrication.

Un objet vise plus particulièrement à empêcher l'exécution d'un programme téléchargé non autorisé dans le circuit.

Un autre objet vise une solution compatible avec le stockage de programmes dans des mémoires externes à l'unité de traitement.

Un autre objet vise une solution complémentaire aux mécanismes classiques de vérification d'intégrité par calcul de signature.

Pour atteindre tout ou partie de ces objets ainsi que d'autres, il est prévu une unité de traitement numérique d'exécution d'instructions de programmes stockés dans au moins deux mémoires et comportant au moins un premier registre de stockage temporaire de l'opérateur d'une instruction courante à exécuter et au moins un deuxième registre de stockage temporaire d'au moins un argument ou opérande de l'instruction, et un circuit de protection pour soumettre, en amont dudit premier registre, ledit opérateur à une fonction de déchiffrement si cet opérateur provient d'une des mémoires ou d'une zone de ces mémoires, identifiée à partir de l'adresse fournie par un compteur programme, l'argument ou opérande n'étant pas soumis au déchiffrement.

Selon un mode de réalisation, un signal fourni par l'unité de traitement identifie, dans une instruction, son opérateur.

Selon un mode de réalisation, ladite fonction de déchiffrement est réalisée sous la forme d'une logique reprogrammable.

Selon un mode de réalisation, ladite fonction de chiffrement est appliquée à des instructions provenant d'une mémoire reprogrammable et n'est pas appliquée à des instructions stockées dans une mémoire non reprogrammable.

Selon un mode de réalisation, le circuit de protection comporte un sélecteur dont une première entrée reçoit le résultat de ladite fonction de déchiffrement tandis qu'une deuxième entrée reçoit directement ledit opérateur non déchiffré, et dont une sortie est reliée en entrée de chargement dudit premier registre.

Il est également prévu un circuit électronique comportant :
une unité de traitement ;
au moins deux mémoires ; et
un décodeur mémoire pour sélectionner, à partir d'une adresse fournie par le compteur programme, la mémoire devant fournir l'instruction suivante à exécuter par l'unité de traitement, ledit décodeur fournissant au circuit de protection un signal d'activation de la fonction de déchiffrement.

L'invention prévoit également un procédé de protection d'un programme de mise à jour d'un circuit électronique, comportant au moins une étape de chiffrement d'opérateurs d'instructions du programme avant leur introduction dans le circuit pour stockage dans une mémoire reprogrammable du circuit, ce dernier comportant une fonction de déchiffrement sélective des opérateurs des instructions selon le caractère reprogrammable ou non de la mémoire d'où proviennent les instructions à exécuter.

L'invention prévoit également un procédé de contrôle de l'exécution, par une unité de traitement, de programmes stockés dans des mémoires, dans lequel seulement les opérateurs des instructions des programmes sont soumis, sélectivement en fonction de la mémoire d'où proviennent les instructions, à une fonction de déchiffrement.

L'invention prévoit également une carte à puce contenant un circuit électronique pourvu d'une unité de traitement.

L'invention prévoit également un décodeur de signaux radiodiffusés contenant un circuit électronique pourvu d'une unité de traitement.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente une carte à puce du type auquel s'applique à titre d'exemple la présente invention ;
la figure 2 représente, de façon très schématique, un récepteur de signaux radiodiffusés du type auquel s'applique à titre d'exemple la présente invention ;
la figure 3 représente, de façon schématique et sous forme de blocs, un exemple d'architecture d'un circuit électronique comportant une unité de traitement numérique ;
la figure 4 représente schématiquement, de façon partielle et sous forme de blocs, un mode de réalisation d'une unité de traitement ;
la figure 5 représente un détail de l'unité de la figure 4 ;
la figure 6 représente un exemple d'instructions d'un programme susceptible d'être traitées par une unité de traitement ; et
les figures 7A, 7B, 7C, 7D et 7E sont des chronogrammes illustrant le fonctionnement de l'unité de la figure 4 pour l'exécution des instructions de la figure 6.

De mêmes éléments ont été désignés par de mêmes références aux différentes figures.

### Description détaillée

Pour des raisons de clarté, seuls les éléments qui sont utiles à la compréhension de l'invention ont été représentés et seront décrits par la suite. En particulier, l'interprétation des instructions d'un programme par l'unité de traitement de l'invention n'a pas été détaillée, l'invention étant compatible avec les interprétations et exploitations classiques des instructions d'un programme. De plus, les mécanismes de stockage d'instructions d'un programme dans une mémoire n'ont pas été détaillés, l'invention étant là encore compatible avec les techniques classiques.

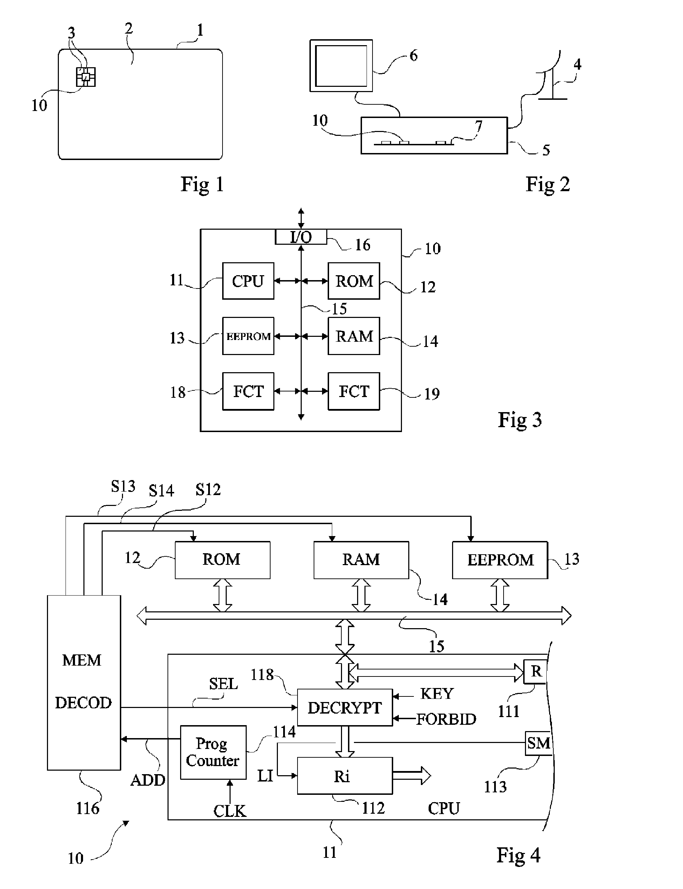

La figure 1 représente, de façon très schématique, une carte à puce 1 du type auquel s'applique à titre d'exemple la présente invention. Une telle carte est par exemple constituée d'un support 2 en matière plastique dans ou sur lequel est rapportée une puce 10 de circuit électronique susceptible de communiquer avec l'extérieur au moyen de contacts 3 ou au moyen d'éléments (non représentés) d'émission/réception sans contact.

La figure 2 représente un autre exemple d'application de la présente invention à des systèmes de télédiffusion à accès contrôlé. Dans cet exemple, une antenne 4 reçoit des signaux provenant d'un satellite (non représenté) qu'elle transmet à un décodeur 5 pour affichage sur un téléviseur 6. Le décodeur 5 comporte une ou plusieurs cartes électroniques 7 pourvues d'un ou plusieurs circuits 10 de traitement des données numériques reçues. Ce traitement consiste en un décodage au moyen d'une ou plusieurs quantités secrètes (clés cryptographiques) que possède le décodeur 5. Ces clés sont contenues dans des mémoires associées au circuit électronique 10 ou sur un élément externe, par exemple une carte à puce introduite dans le décodeur 5.

La figure 3 représente, de façon schématique et sous forme de blocs, un exemple de circuit électronique 10 du type auquel s'applique la présente invention. Ce circuit comporte une unité centrale de traitement 11 (CPU) capable d'exécuter des programmes contenus dans une ou plusieurs mémoires. Dans cet exemple, le circuit 10 comporte une mémoire non volatile et non reprogrammable 12 (ROM), une mémoire non volatile reprogrammable 13 (EEPROM) et une mémoire vive 14 (RAM). Un ou plusieurs bus 15 de données, de commandes et d'adresses servent de support de communication entre les différents constituants du circuit 10 et avec une interface 16 (I/O) d'entrée/sortie pour communication avec ou sans contact avec l'extérieur. Le plus souvent, le circuit 10 comporte d'autres fonctions (blocs 18 et 19, FCT) dépendant de l'application. Il s'agit, par exemple, de cellules de calcul cryptographique dédiées pour mettre en oeuvre des algorithmes de chiffrement.

Le ou les programmes d'origine sont stockés dans la mémoire morte 12 lors de la fabrication du circuit 10. Des codes correctifs (patch) sont susceptibles d'être chargés en mémoire non volatile programmable 13 ou en mémoire vive 14.

La figure 4 représente, de façon très schématique et sous forme de blocs, un mode de réalisation partiel d'une unité centrale de traitement 11 (CPU).

L'unité 11 communique par l'intermédiaire d'un ou plusieurs bus 15 de données, de commandes et d'adresses avec différentes mémoires d'un circuit électronique 10 (par exemple, d'un circuit intégré d'une carte à puce). Le cas échéant, certaines mémoires sont externes au circuit 10. Dans l'exemple de la figure 4, on suppose l'existence d'une mémoire 12 non volatile programmée à la fabrication (ROM), d'une mémoire 13 non volatile reprogrammable (EEPROM) et d'une mémoire vive 14 (RAM). D'autres fonctions non représentées du circuit 10 sont susceptibles de communiquer avec l'unité 11 et les mémoires par les bus 15. Pour simplifier, les éléments de communication avec ou sans contact avec l'extérieur du circuit 10 n'ont pas été représentés.

Comme dans toute unité de traitement de programmes, une instruction est, pour son exécution, transférée dans des registres que contient l'unité 11. Chaque instruction comporte un opérateur et le plus souvent un ou plusieurs opérandes ou arguments (par exemple, des adresses, des variables, etc.). Un registre d'instruction 112 (Ri) est destiné à recevoir les opérateurs des instructions et un ou plusieurs registres 111 (R) sont destinés à recevoir les arguments (adresses) ou opérandes (valeurs) associés aux opérateurs. Le cas échéant, les codes opératoires (opcodes) constituant les arguments ou opérandes proviennent d'une mémoire différente de celle contenant le code opératoire représentant l'opérateur. Le chargement des instructions depuis l'une quelconque des mémoires 12, 13 ou 14 est effectué sous commande d'un compteur programme 114 (Prog Counter) qui fournit une adresse ADD à un décodeur mémoire 116 (MEM DECOD) chargé de sélectionner celle des mémoires qui contient l'instruction réclamée par l'unité de traitement. Le décodeur 116 est soit intégré à l'unité de traitement 11 soit un élément distinct de cette unité 11. Il fournit des signaux S12, S13 et S14 aux mémoires respectives 12, 13 et 14. Ces signaux sont par exemple des signaux individuels à destination des différentes mémoires pour sélectionner la mémoire devant fournir l'instruction sur le bus 15. Selon un autre exemple non représenté, toutes les mémoires reçoivent le même signal dont le contenu diffère selon la mémoire adressée, les mémoires comportant des moyens d'interprétation de ce signal.

Les différents éléments de l'unité de traitement 11 sont synchronisés par un signal d'horloge CLK (pour simplifier, illustré uniquement comme étant fourni au compteur programme 114). Le registre d'instruction 112 reçoit un signal de chargement d'instruction LI (LOAD INTRUCTION) fournit par un séquenceur ou machine d'état 113 (SM) de l'unité centrale lorsqu'une instruction est prête sur le bus 15 pour être chargée dans l'unité de traitement. Les codes opératoires de l'instruction sont répartis dans l'unité 11 entre le registre d'instruction 112 pour l'opérateur et des registres 111 pour les arguments ou opérandes. Le signal LI n'est fourni que pour les opérateurs des instructions et non pour leurs arguments ou opérandes.

Selon un mode de mise en oeuvre, l'opérateur d'une instruction provenant du bus 15 est chargé dans le registre d'instruction 112, soit directement, soit après déchiffrement, en fonction de la mémoire (ou d'une zone mémoire) dans laquelle se trouve cette instruction. En figure 4, cette fonctionnalité a été illustrée par un circuit 118 (DECRYPT) de l'unité de traitement 11, intercalé entre le bus 15 et le registre d'instruction 112. Le circuit 118 reçoit un signal SEL du décodeur mémoire 116 indicateur du besoin ou non de déchiffrer l'instruction présente sur le bus 15 avant transmission au registre 112. Ce signal de sélection est aisément extrait du décodeur mémoire à partir du signal d'adresse fourni par le compteur programme 114 dans la mesure où le rôle de ce décodeur est, à partir de l'adresse ADD, de déterminer la mémoire 12, 13 ou 14 concernée. La cellule 118 contient ou reçoit une clé KEY de déchiffrement ou de décodage des opérateurs chiffrés. La fonction de déchiffrement ne concerne que les opérateurs et pas les arguments ou opérandes.

Pour toute instruction provenant de la mémoire non reprogrammable 12, l'opérateur n'est pas déchiffré et est directement interprétable par l'unité 11. Par contre, pour les instructions (de préférence pour toute instruction) provenant d'une mémoire reprogrammable 13 ou 14, l'opérateur doit être décodé (déchiffré) pour une exécution correcte de l'instruction. Cela signifie qu'un programme de mise à jour n'ayant pas été correctement codé (chiffré) lors de son écriture ou de sa conception ne sera pas interprété correctement par l'unité 11.

Lors de la compilation d'un programme de mise à jour à charger vers des circuits électroniques (par exemple à télécharger), un traitement de chiffrement est effectué. Comme seuls les opérateurs sont chiffrés, une éventuelle détection par un utilisateur malveillant est plus difficile. De plus, le chiffrement peut être effectué sur n'importe quelle instruction (son opérateur) indépendamment du fait que les opérandes ou arguments qu'elle traite soient ou non des variables.

Le déroulement du code lui-même détermine si les données lues dans les mémoires sont à déchiffrer, puisque les seules données chiffrées sont les opérateurs qui sont chargés dans le registre d'instruction. L'unité de traitement reçoit des instructions qui sont un mélange de codes opératoires en clair (les arguments et opérandes) et chiffrés (les opérateurs).

Le téléchargement dans le circuit électronique, donc le stockage en mémoire reprogrammable non volatile 13 ou volatile 14, est effectué avec des opérateurs chiffrés par la clé KEY. Cette clé est, par exemple, stockée lors de la fabrication, donc en mémoire 12, et est donc connue de tous les circuits électroniques susceptibles de recevoir des programmes de mise à jour. En variante, la clé est stockée et/ou modifiée ultérieurement, pourvu que la clé soit connue lors de la compilation du programme hors du circuit.

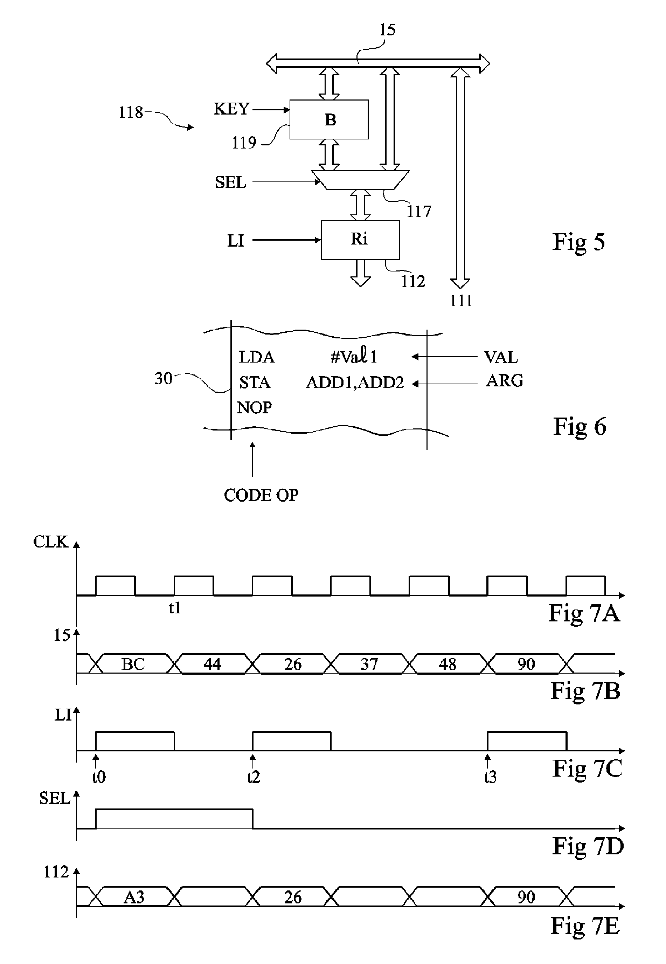

La figure 5 représente, de façon très schématique, un exemple de circuit 118 selon un mode de réalisation de la présente invention. Le signal SEL sert à sélectionner une de deux entrées d'un multiplexeur ou sélecteur 117 parmi une première entrée provenant d'un circuit 119, exécutant une fonction (B) de déchiffrement à l'aide de la clé KEY, et une deuxième entrée provenant directement du bus 15. La sortie du multiplexeur 117 est reliée à l'entrée de chargement du registre 112.

Dans le mode de réalisation illustré par la figure 5, tous les opérateurs provenant du bus 15 sont déchiffrés par le circuit 119, mais le résultat de ce déchiffrement est ou non pris en compte selon la mémoire dont provient l'instruction. En variante, seules les instructions à déchiffrer transitent par la fonction 119.

Dès qu'une instruction provient d'une des mémoires 13 ou 14, le décodeur 116 active le signal SEL pour sélectionner la première entrée du multiplexeur 117 et permettre le stockage de l'opérateur déchiffré dans le registre 112 pour exécution. Ainsi, seules les unités de traitement possédant la clé KEY seront en mesure d'exécuter correctement une mise à jour.

En reprenant l'exemple d'un utilisateur malveillant téléchargeant un programme pirate dans l'une des mémoires pour prendre le contrôle du circuit, le déchiffrement opéré par le bloc 119 lors de l'exécution de ce programme malveillant le rendra inexploitable car l'algorithme de chiffrement conduira à des instructions non interprétables par l'unité de traitement.

Le prétraitement effectué sur l'instruction selon la mémoire d'où elle provient permet donc de sécuriser des programmes téléchargés postérieurement à la fabrication du circuit.

La fonction B de déchiffrement (bloc 116) est, par exemple, réalisée en logique câblée. N'importe quel algorithme de chiffrement symétrique ou asymétrique peut être utilisé pour la mise en oeuvre de l'invention.

En variante, la fonction de déchiffrement 119 est réalisée sous la forme d'une logique reprogrammable (FPGA) afin de pouvoir la modifier si des programmes de mise à jour viennent à être piratés. Cela permet en particulier de rendre ces programmes piratés invalides dès que l'on change la fonction B.

Selon le mode de réalisation illustré par la figure 4, l'élément 118 reçoit également un signal FORBID (optionnel) de blocage, fourni par l'unité de traitement pour interdire l'exécution de mises à jour. Par exemple, le signal FORBID est un drapeau stocké dans un registre du bloc 118 pour bloquer le chargement d'une instruction dans le registre 112 si le signal de sélection détecte le chargement d'une instruction depuis la mémoire vive. En variante, le signal FORBID modifie un paramètre de la fonction de chiffrement qui n'est alors plus en mesure de décoder correctement les lignes des programmes de mise à jour.

La figure 6 représente un exemple partiel de code exécutable comprenant trois lignes d'instructions pourvue chacune d'un opérateur CODEOP et, pour les deux premières lignes, respectivement d'un opérande VAL et d'un argument ARG. Les exemples d'instructions choisis sont arbitraires. La première ligne est une instruction LDA de chargement d'une valeur Val1. La deuxième ligne est une instruction de stockage STA de cette valeur aux adresses ADD1 et ADD2 d'une mémoire et la troisième ligne est une instruction d'attente NOP (no operation). On suppose que la première ligne est contenue dans la mémoire 13 tandis que les deux lignes suivantes sont dans la mémoire morte 12. Il s'agit d'un exemple simplifié. En pratique la répartition des instructions entre les différentes mémoires s'effectuera plutôt par programme ou sous-programme que par ligne d'un même programme.

Les figures 7A, 7B, 7C, 7D et 7E illustrent, par des chronogrammes, l'exécution des trois lignes du programme 30 de la figure 6. La figure 7A représente le signal d'horloge CLK. La figure 7B représente les signaux transitant sur le bus 15. La figure 7C représente le signal LI de chargement d'instruction dans le registre 112, déclenché par le compteur programme 114. La figure 7D représente le signal SEL. Pour simplifier, les décalages temporels dus aux temps de propagation ont été négligés.

La première instruction démarre à un instant t0 par un changement d'état (par exemple vers l'état haut) du signal LI. Ce basculement du signal LI indique au bloc 118 que le code représentant l'opérateur LDA (par exemple, le code hexadécimal BC) présent sur le bus 15 doit être chargé dans le registre d'instruction 112. S'agissant d'un opérateur venant de la mémoire 13, ce chargement ne s'effectue qu'après déchiffrement par l'élément 119. On suppose que le code BC déchiffré donne le code A3. Ce code A3 est fourni au registre 112 et est interprétable par l'unité 11 comme correspondant à l'opérateur LDA. En l'absence de déchiffrement correct, le code obtenu à partir du code BC est celui d'un autre opérateur (ou d'aucun opérateur) et ne conduit donc pas à l'exécution attendue.

Au cycle d'horloge suivant (instant t1), l'opérande Val1 (valant par exemple 44 en hexadécimal) est présent sur le bus et est exploité par l'unité centrale. S'agissant d'un opérande (identifié par le fait que le signal LI étant revenu au repos), la valeur ne transite pas par le registre d'instruction 112 mais est stockée dans un des registres 111. De plus, cet opérande n'est pas chiffré. Une fois la première ligne d'instruction terminée, le signal LI rebascule vers l'état haut à un instant t2 indiquant le besoin de chargement de l'instruction suivante.

Comme l'opérateur de cette instruction provient de la mémoire morte, considérée comme sûre, le signal SEL reste inactif et le code de l'opérateur n'est pas modifié pour son chargement dans le registre 112 par rapport à la valeur lue sur le bus. Ce code correspond directement à celui de l'opérateur STA. Comme pour la première instruction, les arguments (ici, 37 et 48) présents dans les deux cycles d'horloge suivants transitent sans passer par le registre d'instruction 112.

La troisième instruction (code 90) est également exécutée directement à partir d'un instant t3.

Un avantage est de permettre de sécuriser les programmes de mise à jour téléchargés dans des circuits électroniques après fabrication.

Un autre avantage est d'être compatible avec les mécanismes de détection classiques de tentatives de déroutement ou de perturbation d'un programme. En effet, un calcul de signature reste possible pour vérifier la signature des programmes enregistrés.

Bien entendu, la présente invention est susceptible de diverses variantes et modifications qui apparaîtront à l'homme de l'art. En particulier, la mise en oeuvre pratique de l'invention (notamment la synchronisation des signaux) et son adaptation à une architecture donnée d'une unité de traitement est à la portée de l'homme du métier à partir des indications fonctionnelles données ci-dessus. En outre, une unité de traitement pourra comprendre plusieurs mécanismes de chiffrement différents respectivement affectés à des zones ou mémoires à surveiller. Enfin, bien que l'invention ait été décrite en relation avec un exemple différenciant les mémoires en fonction de leur caractère reprogrammable ou non, les mémoires pourront être réparties selon d'autres critères, par exemple selon qu'il s'agit de mémoires (y compris reprogrammables) externes ou internes à un circuit ou à une zone d'un circuit considérée comme sûre, c'est-à-dire, dont toute modification du contenu peut être considérée comme valide.

## Revendications

1. Unité de traitement numérique (11) d'exécution d'instructions de programmes stockés dans au moins deux mémoires (12, 13, 14) et comportant au moins un premier registre (112) de stockage temporaire de l'opérateur d'une instruction courante à exécuter et au moins un deuxième registre (111) de stockage temporaire d'au moins un argument ou opérande de l'instruction, **caractérisée en ce qu'**elle comporte un circuit de protection (118) pour soumettre, en amont dudit premier registre, ledit opérateur à une fonction de déchiffrement (119) si cet opérateur provient d'une des mémoires ou d'une zone de ces mémoires, identifiée à partir de l'adresse (ADD) fournie par un compteur programme (114), l'argument ou opérande n'étant pas soumis au déchiffrement.

2. Unité de traitement selon la revendication 1, dans laquelle un signal (LI) fourni par l'unité de traitement identifie, dans une instruction, son opérateur.

3. Unité de traitement selon l'une quelconque des revendications 1 et 2, dans laquelle ladite fonction de déchiffrement (119) est réalisée sous la forme d'une logique reprogrammable.

4. Unité de traitement selon l'une quelconque des revendications 1 à 3, dans laquelle ladite fonction de chiffrement (119) est appliquée à des instructions provenant d'une mémoire reprogrammable (13, 14) et n'est pas appliquée à des instructions stockées dans une mémoire non reprogrammable (12).

5. Unité de traitement selon l'une quelconque des revendications 1 à 4, dans laquelle le circuit de protection (118) comporte un sélecteur (117) dont une première entrée reçoit le résultat de ladite fonction de déchiffrement (119) tandis qu'une deuxième entrée reçoit directement ledit opérateur non déchiffré, et dont une sortie est reliée en entrée de chargement dudit premier registre (112).

6. Circuit électronique comportant :
une unité de traitement (11) selon l'une quelconque des revendications 1 à 5 ;
au moins deux mémoires (12, 13, 14) ; et
un décodeur mémoire (116) pour sélectionner, à partir d'une adresse fournie par le compteur programme (114), la mémoire devant fournir l'instruction suivante à exécuter par l'unité de traitement, ledit décodeur fournissant au circuit de protection un signal (SEL) d'activation de la fonction de déchiffrement (119).

7. Procédé de protection d'un programme de mise à jour d'un circuit électronique (10), **caractérisé en ce qu'**il comporte au moins une étape de chiffrement d'opérateurs d'instructions du programme avant leur introduction dans le circuit pour stockage dans une mémoire reprogrammable (13, 14) du circuit, ce dernier comportant une fonction de déchiffrement (119) sélective des operateurs des instructions selon le caractère reprogrammable ou non de la mémoire d'où proviennent les instructions à exécuter.

8. Procédé de contrôle de l'exécution, par une unité de traitement (11), de programmes stockés dans des mémoires, **caractérisé en ce que** seulement les opérateurs des instructions des programmes sont soumis, sélectivement en fonction de la mémoire d'où proviennent les instructions, à une fonction de déchiffrement (119).

9. Carte à puce (1) contenant un circuit électronique (10) pourvu d'une unité de traitement conforme à l'une quelconque des revendications 1 à 5.

10. Décodeur de signaux radiodiffusés (5) contenant un circuit électronique (10) pourvu d'une unité de traitement conforme à l'une quelconque des revendications 1 à 5.
